# EUROPEAN PATENT SPECIFICATION

(11) **EP 4 446 618 B1**
(45) Date of publication and mention of the grant of the patent: **20.08.2025**
(21) Application number: 23168065.3
(22) Date of filing: 14.04.2023
(51) Int. Cl.: F16H 57/04

(54) **OIL SYSTEM, CONTROL DEVICE AND METHOD FOR CONTROLLING OIL SUPPLY TO ELECTRICAL MACHINE**
ÖLSYSTEM, STEUERUNGSVORRICHTUNG UND VERFAHREN ZUR STEUERUNG DER ÖLZUFUHR ZU EINER ELEKTRISCHEN MASCHINE
SYSTÈME D'HUILE, DISPOSITIF DE COMMANDE ET PROCÉDÉ DE COMMANDE D'ALIMENTATION EN HUILE D'UNE MACHINE ÉLECTRIQUE

(43) Date of publication of application: 16.10.2024
(73) Proprietor: Scania CV AB, 151 87 Södertälje (SE)
(72) Inventor: ARNELÖF, Per, 136 66 Vendelsö (SE); KARLSSON, Stefan, 645 61 Stallarholmen (SE); FORSBERG, Jörgen, 647 35 Mariefred (SE); INGESSON, Mattias, 117 56 Stockholm (SE)
(74) Representative: Scania CV AB

(56) References cited:
- CN-A- 113 958 703
- US-A1- 2020 011 410

## Description

### TECHNICAL FIELD

The present invention relates in general to a method for controlling oil supply to an electrical machine of a vehicle powertrain, and a control device configured to control oil supply to an electrical machine. The present invention further relates in general to a computer program and a computer-readable medium and a vehicle.

### BACKGROUND

The strive to reduce emissions and improve fuel economy of heavy vehicles, such as trucks and buses, has led to the development of vehicles comprising vehicle powertrains that uses one or more electrical machines as a propulsion unit. Examples of such vehicles include Plug-in Hybrid Electric Vehicles (PHEVs), and Battery Electric Vehicles (BEVs).

In a vehicle powertrain comprising an electrical machine, the oil system can be designed in various ways. One option is to use separate oil systems for the transmission and the electrical machine. This has the advantage of enabling a tailored oil supply to the different needs of the transmission and the electrical machine, but it adds complexity. Another option is to use a combined oil system for both the transmission and the electrical machine of a vehicle powertrain, which provides many advantages. A combined oil system for example provides a cost effective solution as well as an efficient use of available space. This is a result of the ability to use the same oil, oil filter and heat exchanger for both the transmission and the electrical machine.

However, in a combined oil system, all oil consumers will need to be supplied with oil at the same time. This means that the oil system needs to be dimensioned to ensure sufficient oil flow to the oil consumer having the highest demand. However, the demand of the different oil consumers will change depending on the operating point. This may in turn result in excessive flow to some parts, and hence an unduly high energy consumption of the oil system.

More specifically, the electrical machine and the transmission of the vehicle powertrain typically have different efficiency maps depending on the power and rotational speed of the electrical machine. Although the variations in efficiency of the transmission depending on the power and rotational speed of the electrical machine may possibly be regarded as fairly constant, the electrical machine may typically have low efficiency at both low and high rotational speeds.

Examples of oil systems configured to supply oil to both a transmission and an electrical machine of a vehicle powertrain are described in for example US 2020/0011410 A1 and SE 541 765 C2.

The document US2020/0011410 A1 describes an oil system for supplying oil to a transmission and an electrical machine of a vehicle powertrain. The oil system comprises a mechanical pump transferring oil to a first supply conduit of the oil system, a speed of the mechanical pump being dependent of a rotational speed of the electrical machine, a second supply conduit for supplying oil to the transmission, the second supply conduit fluidly connected to the first supply conduit at a downstream end of the first supply conduit, and a third supply conduit for supplying oil to the electrical machine, the third supply conduit fluidly connected to the first supply conduit at the downstream end of the first supply conduit. The oil system further comprises a controllable valve configured to control an amount of oil supplied to the electrical machine via the third supply conduit through control of oil pressure distribution between the second supply conduit and the third supply conduit.

The document CN 113 958 703 A describes a hydraulic system and a vehicle. The hydraulic system comprises a supply oil circuit, a lubricating oil circuit and a driving oil circuit, the lubricating oil circuit communicates with the oil supply circuit and comprises a gear train lubricating oil circuit, a driving and power generating unit lubricating oil circuit and a bearing lubricating oil circuit.

### SUMMARY

The object of the present invention is to provide an efficient method for controlling oil supply to a transmission and an electrical machine of a vehicle powertrain.

The object is achieved by the subject-matter of the appended independent claim(s).

An oil system is configured to supply oil to a transmission and an electrical machine of a vehicle powertrain. The oil system comprises a mechanical pump configured to transfer oil to a first supply conduit of the oil system, a speed of the mechanical pump being dependent of a rotational speed of the electrical machine. The oil system further comprises a second supply conduit configured to supply oil to the transmission. The second supply conduit is fluidly connected to the first supply conduit at a downstream end of the first supply conduit. The oil system also comprises a third supply conduit configured to supply oil to the electrical machine. The third supply conduit is fluidly connected to the first supply conduit at the downstream end of the first supply conduit. Moreover, the oil system further comprises a controllable valve configured to control an amount of oil supplied to the electrical machine via the third supply conduit through control of oil pressure distribution between the second supply conduit and the third supply conduit.

The controllable valve of the oil system allows for controlling the amount of oil supply to the electrical machine. More specifically, it allows for increasing the oil flow to the electrical machine to meet the highest cooling requirements thereof, when needed, without also simultaneously unduly increasing the oil flow to the transmission. This in turn reduces the energy losses of the oil system.

More specifically, an electrical machine typically has lower efficiency and higher losses at higher rotational speeds compared to average rotational speeds, and therefore also a high cooling need at such speeds. Therefore, it is desirable to be able to increase the oil flow to the electrical machine at such high rotational speeds. By means of the herein described oil system, this increase of the oil flow to the electrical machine may be achieved at the expense of the oil flow to the transmission, and does therefore not require a larger mechanical pump which would be required in case the oil flow to the transmission would not be reduced. This increase of the oil flow to the electrical machine at the expense of the oil flow to the transmission is achieved by controlling the controllable valve so as to alter the oil pressure distribution, and thus oil flow distribution, between the second supply conduit and the third supply conduit. In view of the speed of the mechanical pump being dependent of the rotational speed of the electrical machine, the oil flow in the oil system will still be sufficiently high to meet the demand of the transmission even when the oil flow to the electrical machine is increased to meet the cooling needs at high rotational speeds.

Moreover, the controllable valve allows for increasing the oil flow to the electrical machine also in situations where a maximum cooling is not needed, which in turn may increase the efficiency of the electrical machine. This would also result in an increase in the temperature of the transmission as a result of the reduced oil flow thereto, which in turn may increase the efficiency thereof. Additionally, or alternatively, a lower oil pressure in the first supply conduit may be allowed in such situations, which also improves the energy efficiency of the oil system.

The present invention provides a method, performed by a control device, for controlling oil supply to an electrical machine of a vehicle powertrain using the oil system described above. The method comprises a step of, in response to a determination that a predetermined criterion is fulfilled, controlling the controllable valve to an at least partially throttled position, unless the controllable valve is already in said position. Said predefined criterion is that:
- the oil temperature at the downstream end of the first supply conduit is above a predetermined temperature threshold,
- the electrical machine is operated above an upper power threshold, and
- the rotational speed of the electrical machine is within a predetermined rotational speed interval, said predetermined rotational speed interval being defined by a lower rotational speed threshold and an upper rotational speed threshold.

The method provides the same advantages as described above with regard to the oil system configured to supply oil to a transmission and an electrical machine of a vehicle powertrain.

According to one embodiment, the step of controlling the controllable valve to an at least partially throttled position may comprise controlling the controllable valve to a closed position. This enables a more predictable oil flow to the electrical machine since it does not require determining or estimating a throttled position to achieve a desired oil flow to the electrical machine. Thus, it facilitates the control of the oil supply to the electrical machine.

The method may further comprise a step of, in response to a determination that the rotational speed of the electrical machine is above the upper rotational speed threshold while the controllable valve is in an at least partially throttled position, controlling the controllable valve to an open position. Thereby, the amount of oil supplied to the electrical machine is increased. This increases the cooling of the electrical machine, which is advantageous since the efficiency of the electrical machine decreases at rotational speeds above the upper rotational speed threshold.

The present invention further relates to a computer program comprising instructions which, when executed by a control device, cause the control device to carry out the method as described above.

The present invention further relates to a computer-readable medium comprising instructions which, when executed by a control device, cause the control device to carry out the method as described above.

The present invention further provides a control device configured to control oil supply to an electrical machine of a vehicle powertrain using the oil system described above. The control device is configured to, in response to a determination that a predetermined criterion is fulfilled, control the controllable valve to an at least partially throttled position (unless the controllable valve is already in said position). Said predetermined criterion is that:
- the oil temperature at the downstream end of the first supply conduit is above a predetermined temperature threshold,
- the electrical machine is operated above an upper power threshold, and
- the rotational speed of the electrical machine is within a predetermined rotational speed interval, said predetermined rotational speed interval being defined by a lower rotational speed threshold and an upper rotational speed threshold.

The control device provides the same advantages as described above with regard to the oil system configured to supply oil to a transmission and an electrical machine of a vehicle powertrain.

The present invention further provides a vehicle comprising a vehicle powertrain. The vehicle powertrain comprises a transmission and an electrical machine. The vehicle further comprises the the control device described above.

The vehicle may be a heavy land-based vehicle, such as a truck or a bus, but is not limited thereto. Moreover, the vehicle may be a fully electric vehicle or a hybrid vehicle.

### BRIEF DESCRIPTION OF DRAWINGS

Fig. 1 schematically illustrates a side view of an example of a vehicle according to the present invention,
Fig. 2 schematically illustrates a first exemplifying embodiment of an oil system, which does not form part of the present invention,
Fig. 3 schematically illustrates a second exemplifying embodiment of an oil system, which does not form part of the present invention,
Fig. 4 represents a flowchart schematically illustrating a first exemplifying embodiment of the herein described method for controlling oil supply to an electrical machine of a vehicle powertrain, according to the present invention;
Fig. 5 schematically illustrates a device that does not form part of the present invention.

### DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof. In the present invention, the term "controllable valve" is intended to mean a valve whose operational state, e.g. open, partially throttled (if available), or closed position, may be actively controlled. A controllable valve requires some form of auxiliary energy for the purpose of controlling the operation thereof. Thus, a controllable valve is not considered to encompass e.g. a self-actuated valve.

Moreover, the terms "downstream" and "upstream" are used herein in relation of an intended flow direction of oil within the oil system.

The present invention relates to a method for controlling oil supply to both a transmission and an electrical machine for the purpose of cooling and/or lubrication thereof, the transmission and electrical machine both being comprised in a vehicle powertrain. It should here be noted that since the electrical machine is a part of the vehicle powertrain, said electrical machine constitutes a propulsion unit of the vehicle. The vehicle powertrain may however comprise one or more additional propulsion units, if desired, such as a combustion engine and/or a second electrical machine.

As mentioned above, the vehicle powertrain comprises an electrical machine and a transmission. The transmission is configured to selectively transfer torque between the electrical machine and a drive shaft of the vehicle powertrain (optionally via a propeller shaft), said drive shaft configured to be connected to drive wheels of a vehicle in which the powertrain is arranged. The present invention is not limited to any specific configuration of the vehicle powertrain as long as the vehicle powertrain comprises an electrical machine and a transmission. The vehicle powertrain may for example have a central drive configuration, in which the electrical machine and the transmission are connected via a propeller shaft to the drive shaft and the associated drive wheels. Alternatively, the vehicle powertrain may have an electric drive axle configuration, in which the electrical machine and the transmission are arranged at the drive shaft. In an electric drive axle configuration, there is no need for a propeller shaft for transferring propulsion power from the electrical machine to the drive wheels of the vehicle.

The oil system comprises a mechanical pump whose speed is dependent of the speed of the electrical machine of the vehicle powertrain. The mechanical pump may for example be directly driven by the electrical machine. Alternatively, the mechanical pump may be driven by a shaft of the transmission of the vehicle powertrain. Said shaft of the transmission may suitably be a shaft having a rotational speed which is directly linked to the rotational speed of the electrical machine independently of which gear is currently engaged in the transmission, but is not limited thereto. The shaft may for example be the input shaft of the transmission, but is not limited thereto. The mechanical pump is configured to transfer oil, typically from an oil sump of the oil system, to a first supply conduit of the oil system.

In addition to the first supply conduit, the oil system further comprises at least a second supply conduit and a third supply conduit. Each of the second supply conduit and the third supply conduit are, at their respective upstream ends, connected to the downstream end of the first supply conduit. Described differently, the first supply conduit may be considered to be branched into the second and third supply conduits at a downstream end of the first supply conduit. The second supply conduit is configured to supply oil to the transmission of the vehicle powertrain whereas the third supply conduit is configured to supply oil to the electrical machine of the vehicle powertrain.

The oil system further comprises a controllable valve configured to control the amount of oil supplied to the electrical machine via the third supply conduit. More specifically, the controllable valve is configured to control the oil pressure distribution, and thus also oil flow distribution, between the second supply conduit and the third supply conduit. This in turn results in a control of the amount of oil supplied to the electrical machine in view of affecting the distribution of the amount of oil, having been transferred into the first supply conduit, suppled to the transmission (via the second supply conduit) and the electrical machine (via the third supply conduit), respectively. The controllable valve may for example be an on-off solenoid valve or a proportional solenoid valve.

More specifically, controlling the controllable valve from an open position to a partially throttled or a closed position increases the oil pressure in the supply conduit in which the controllable valve is arranged, and thereby alters the distribution of the oil pressure from the first supply conduit between the second supply conduit and the third supply conduit. This in turn leads to a higher resistance to oil flow in the supply conduit in which the controllable valve is arranged. Since the resistance to oil flow in the supply conduit (of the second or third supply conduits) which does not comprise the controllable valve is substantially unaffected by the operational state of the controllable valve (said resistance being dependent primarily of the load provided by the transmission or the electrical machine), the increased resistance to oil flow in the supply conduit comprising the controllable valve will lead to an increased oil flow in the other supply conduit of the second or third supply conduits not comprising the controllable valve. Similarly, controlling the controllable valve from a closed position or a partially throttled position to a more open position reduces the oil pressure in the supply conduit in which the controllable valve is arranged, and thus also the resistance to oil flow in said supply conduit. Thereby, the oil flow in the supply conduit comprising the controllable valve increases while the oil flow in the other supply conduit decreases.

The controllable valve is arranged in the oil system, downstream of the downstream end of the first supply conduit. More specifically, the controllable valve may be arranged in either the second supply conduit or in the third supply conduit. Preferably, the controllable valve is arranged in the third supply conduit in view of its purpose primarily being to control the amount of oil supplied to the electrical machine.

The oil system may, in addition to the mechanical pump, advantageously also comprise an electric pump. If present, the electric pump is arranged in parallel with the mechanical pump within the oil system and is configured to supply oil to the first supply conduit. The fact that the electric pump is arranged in parallel with the mechanical pump is here intended to mean that it is arranged in parallel with the mechanical pump as seen in a flow direction of oil within the oil system. It should however be noted that the mechanical pump and the electrical pump need not be physically arranged in parallel. In case the oil system comprises only a mechanical pump, the oil pressure in the first supply conduit, and thus the oil flow, will always be directly dependent of the rotational speed of the electrical machine. This means that the cooling capacity of the electrical machine may be limited at certain operational conditions of the vehicle, such as at slow speed driving, during take-off or at slow speed precision maneuvering of the vehicle. For example, at slow speed driving, the efficiency of the electrical machine is typically low and a high cooling need may occur. To compensate for this, a larger mechanical pump may be needed. However, such a larger pump will then likely lead to an unduly high oil flow at higher driving speeds of the vehicle and thereby an unnecessary loss of energy. In case the oil system comprises both a mechanical pump and an electric pump, it is possible to dimension the mechanical pump to a size suitable to fit the oil flow need at cruising speed for normal conditions (such as ambient temperature, vehicle load, road inclination etc.) and utilize the electric pump for support when needed, such as during take-off of the vehicle and/or at tougher conditions (such as warmer ambient temperatures and/or larger road inclinations).

The reason for not only using an electrical pump in the oil system is that it would have to big, and thus also costly, to be able to meet the maximum requirements of the oil system. Furthermore, the electrical pump would also need to work at cold ambient conditions, at which the viscosity of the oil within the system may be low, which would add even more complexity and cost since a more powerful electric motor would be needed in the electric pump. Thus, if the oil system should comprise only one pump, it is more appropriate to use a mechanical pump than an electrical pump.

The oil system may advantageously comprise a heat exchanger arranged in the first supply conduit. Arranging a heat exchanger in the first supply conduit has the advantage of enabling efficient cooling of the oil supplied both to the transmission and to the electrical machine without having to utilize two separate heat exchangers, one in the second supply conduit and another in the third supply conduit, to achieve the desired cooling of the oil. This reduces the cost of the oil system, a more efficient use of available space onboard the vehicle as well as an efficient control of the cooling capacity of the oil system.

Alternatively, or additionally, the oil system may also comprise an oil filter arranged in the first supply conduit. Arranging an oil filter in the first supply conduit ensures adequate filtering of the oil supplied to both the transmission and the electrical machine without the need for arranging one oil filter in the second supply conduit and another oil filter in the third supply conduit. Thus, arranging the oil filter in the first supply conduit reduces the cost and complexity of the oil system compared to if using two separate oil filters.

As mentioned above, the controllable valve may suitably be arranged in the third supply conduit. In order to ensure a minimum acceptable oil flow to the electrical machine irrespectively of the operational condition of the controllable valve, the oil system may in such a case comprise a fourth supply conduit bypassing the controllable valve. Such a fourth supply conduit may suitably be fluidly connected to the third supply conduit at a first connection point, arranged upstream of the controllable valve, and a second connection point, arranged downstream of the controllable valve. Both said first connection point and said second connection point are thus suitably arranged in the third supply conduit. The presence of such a fourth supply conduit for examples enables usage of a controllable valve of on-off type, such on-off valves typically being less costly, more robust and easier to control than for example a proportional valve. The fourth supply conduit may be configured for a considerably lower oil flow compared to the oil flow in the third supply conduit with the controllable valve in a completely open condition.

In case the herein described oil system comprises the above described fourth supply conduit, the oil system may suitably be configured for the controllable valve being in a closed position when a predetermined criterion is fulfilled. Said predetermined criterion is that the electrical machine is operated above an upper power threshold and the rotational speed of the electrical machine is within a predetermined rotational speed interval at the same time as the oil temperature at the downstream end of the first supply conduit is above a predetermined temperature threshold. The predetermined rotational speed interval is defined by an upper rotational speed threshold and a lower rotational speed threshold. Typically, the highest efficiency of an electrical machine is obtained within said predetermined rotational speed interval. Furthermore, the upper power threshold of the electrical machine may correspond to a power threshold at which the electrical machine is considered to be close to (or at) its maximum power capacity. The above mentioned upper power threshold and predetermined rotational speed interval depend on the configuration of the electrical machine used, and may for example be specified by a manufacturer of the electrical machine or determined by conventional experimental methods therefore. The predetermined temperature threshold may correspond to a temperature of the oil above which it may be considered to have a relatively low cooling capacity, such that the oil flow in the oil system may need to be relatively high.

In case the controllable valve is arranged in the third supply conduit and the oil system does not comprise the above described fourth supply conduit bypassing the controllable valve, the oil system may instead be configured for the controllable valve being in a partially throttled position when the predetermined criterion is fulfilled. A partially throttled position of the controllable valve has essentially the same effect as achieved by the above described fourth supply conduit since it allows a certain flow of oil to the electrical machine via the third supply conduit, this flow however being lower than if the controllable valve is in the open position. It should however be noted that in case the oil system does not comprise the fourth supply conduit and is configured for the controllable valve being in a partially throttled position when the predetermined criterion is fulfilled, an on-off valve cannot be used as the controllable valve since such a valve can only be controlled to an open or a closed position.

That the oil system is configured for the controllable valve being in a closed position, or a partially throttled position, when the predetermined criterion is fulfilled means that the oil system is dimensioned for providing an appropriate balance of the oil supply to the electrical machine and the transmission of the vehicle powertrain to meet the cooling requirements at high operating temperatures of the electrical machine and transmission and at, or close to, the maximum power of the electrical machine. Moreover, this enables to increase the oil flow to the electrical machine in case the rotational speed increases above the upper rotational speed threshold by opening the controllable valve. The efficiency of the electrical machine decreases when the rotational speed is above the upper rotational speed threshold and a higher cooling thereof is therefore desired.

The oil temperature at the downstream end of the first supply conduit may be determined by measuring the actual oil temperature using a sensor configured therefore. Such sensors are known in the art and will therefore not be described in the present invention. The sensor may be arranged at the downstream end of the first supply conduit, or at a position within the oil system at which the oil temperature would essentially correspond to the oil temperature at the downstream end of the first supply conduit. Alternatively, the oil temperature at the downstream end of the first supply conduit may be determined by estimating the oil temperature based on the operational conditions of the vehicle powertrain and the oil system, optionally also taking into account factors such as ambient temperature and/or oil temperature in the oil sump of the oil system.

Irrespectively of whether the oil system is configured for the controllable valve being in a closed or a partially throttled position when the predetermined criterion is fulfilled, the oil system may suitably be configured for the controllable valve being in a fully open position when the electrical machine is operated below the above mentioned upper power threshold. This means that for most driving conditions of the vehicle, at which the electrical machine is not operated at or close to its maximum power capacity, the controllable valve will be fully open. Thus, the distribution of oil flow to the transmission and the electrical machine, respectively, of the vehicle powertrain will be governed by the dimensions of the second supply conduit and the third supply conduit, respectively. Compared to the situation in which the electrical machine is operated above the upper power threshold, this will lead to a higher oil supply to the electrical machine for a given rotational speed of the electrical machine within the predetermined rotational speed interval, and thus more cooling of the electrical machine which improves the efficiency thereof. This will naturally also lead to a lower oil supply to the transmission (for a given rotational speed of the electrical machine within the predetermined rotational speed interval), compared to the situation in which the electrical machine is operated above the upper power threshold, which however is acceptable since the power is not so high. The lower oil flow to the transmission leads to a higher temperature of the transmission, which may increase the efficiency thereof. Moreover, it may be possible to reduce the oil pressure in the first supply line, e.g. by reducing the speed of the electrical pump or even stopping the electrical pump, if present. This in turn results in lower energy consumption of the oil system. In case the oil system does not comprise the electrical pump, the oil pressure in the first supply conduit may be lowered by using a pressure relief valve arranged in a return conduit configured to direct oil back to the oil sump, said return conduit fluidly connected to the first supply conduit in the vicinity of the mechanical pump. In case said pressure relief valve is opened, part of the oil in the first supply conduit is directed back to the oil sump which reduces the oil pressure in first supply conduit, which in turn makes the pump work easier. Such a pressure relief valve, arranged in a return conduit from the first supply conduit, may naturally be present in the oil system also in case the oil system comprises the electrical pump.

In some cases, the electrical machine may comprise two cooling circuits, one primary cooling circuit and one auxiliary cooling circuit. In such cases, the third supply conduit may be configured to supply oil to the primary cooling circuit of the electrical machine and the oil system comprising a fifth supply conduit configured to supply oil to the auxiliary cooling circuit of the electrical machine. Depending on the desired cooling by, and desired ability to control oil supply to, the auxiliary cooling circuit of the electrical machine, the fifth supply conduit may either be fluidly connected to the third supply conduit downstream of the controllable valve or be fluidly connected to the second supply conduit. Alternatively, the fifth supply conduit may be fluidly connected to the first supply conduit at the downstream end of the first supply conduit.

The present invention relates to a method for controlling oil supply to an electrical machine of a vehicle powertrain, where said oil supply is achieved by herein described oil system when the controllable valve is arranged in the first supply conduit. The method is performed by a control device configured therefore. The method comprises a step of, in response to a determination that a predetermined criterion is fulfilled, controlling the controllable valve of the oil system to an at least partially throttled position, unless the controllable valve is already in said position. The predetermined criterion is that the oil temperature at the downstream end of the first supply conduit is above a predetermined temperature threshold while the electrical machine is operated above an upper power threshold and the rotational speed of the electrical machine is within a predetermined rotational speed interval. Said predetermined rotational speed interval is defined by a lower rotational speed threshold and an upper rotational speed threshold.

Controlling the controllable valve from an open position to the at least partially throttled position alters the oil pressure distribution between the second supply conduit and the third supply conduit, and therefore also the oil flow distribution between the second supply conduit and the third supply conduit. The highest oil flow to the electrical machine is needed when it is operated above the upper power threshold and at rotational speeds above the upper rotational speed threshold, and when the oil temperature within the oil system is relatively high (such as after a certain period of time of normal operation of the vehicle powertrain). At the same time, the oil flow within the oil system increases with increasing rotational speed of the electrical machine, which may result in energy losses resulting from the transmission being supplied with more oil than needed. By controlling the controllable valve so as to alter the distribution of the oil flow between the second supply conduit and the third supply conduit, such that the oil flow to the electrical machine is increased to meet its highest demand at the expense of the oil flow to the transmission, the energy losses may be reduced. However, in order to be able to achieve such an increase of the oil flow to the electrical machine at the expense of the oil flow to the transmission when the rotational speed of the electrical machine is increased above the upper rotational speed threshold, the oil system should be designed to give a balanced oil flow to meet the highest oil flow demands at rotational speeds at or below the upper rotational speed threshold. This is the reason for controlling the controllable valve to the at least partially throttled position when the predetermined criterion is fulfilled.

The above-described step of controlling the controllable valve to an at least partially throttled position may comprise controlling the controllable valve to a closed position, at least in case the controllable valve is bypassed by a fourth supply conduit in case the controllable valve is arranged in the third supply conduit.

The method may further comprise, in response to a determination that the rotational speed of the electrical machine is equal to or above the upper rotational speed threshold while the controllable valve is in an at least partially throttled position, controlling the controllable valve to an open position so as thereby increase the amount of oil supplied to the electrical machine.

The performance of the herein described method for controlling oil supply to an electrical machine of a vehicle powertrain may be governed by programmed instructions. These programmed instructions typically take the form of a computer program which, when executed in or by a control device, causes the control device to effect desired forms of control action. Such instructions may typically be stored on a computer-readable medium.

The present invention also provides a control device configured to perform the herein described method for controlling oil supply to an electrical machine of a vehicle powertrain. The control device may be configured to perform any one of the steps of the method described herein.

More specifically, the present invention provides a control device configured to control oil supply to an electrical machine of a vehicle powertrain, where said oil supply is achieved by the oil system as described herein. The control device is configured to, in response to a determination that a predetermined criterion is fulfilled, control the controllable valve to an at least partially throttled position, unless the controllable valve is already in said position. Said predefined criterion is that the oil temperature at the downstream end of the first supply conduit is above a predetermined temperature threshold while the electrical machine is operated above an upper power threshold and the rotational speed of the electrical machine is within a predetermined rotational speed interval.

Said rotational speed interval is defined by a lower rotational speed threshold and an upper rotational speed threshold.

The control device may further be configured to determine whether the above mentioned predetermined criterion is fulfilled. Alternatively, the control device may be configured to receive information from a controller (not comprised in the control device) that the above mentioned predetermined criterion is fulfilled. For said purpose, the control device may be configured to communicate with said controller. The control device may suitably also be configured to request information from said controller whether the predetermined criterion is fulfilled.

The control device may comprise one or more control units. In case of the control device comprising a plurality of control units, each control unit may be configured to control a certain function/action or a certain function/action may be divided between more than one control units. The control device may be a control device of the herein described oil system or a control device of the vehicle powertrain, but is not limited thereto.

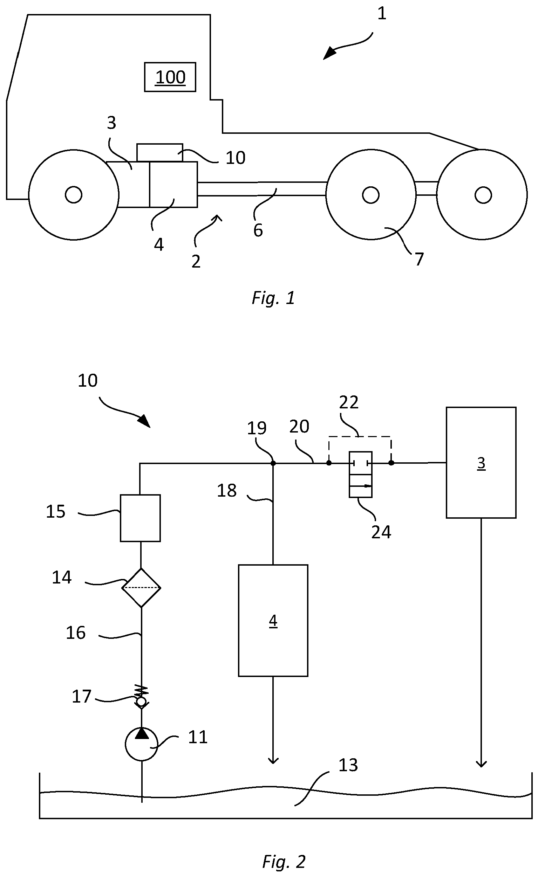

Figure 1 schematically illustrates a side view of an example of a vehicle 1, here illustrated as a truck. The vehicle 1 comprises a powertrain 2 having a central drive configuration. The vehicle powertrain 2 comprises at least one propulsion unit, wherein said at least one propulsion unit is an electrical machine 3. The vehicle powertrain 2 further comprises a transmission 4 configured to selectively transfer driving torque to the driving wheels 7 of the vehicle powertrain 2. The transmission 4 may be connected to the driving wheels 7 via a propeller shaft 6, which is also a constituent component of the vehicle powertrain 2. The vehicle 1 further comprises an oil system 10 configured to supply oil to the transmission 4 as well as the electrical machine 2. The vehicle 1 may further comprise a control device 100 configured to control oil supply to the electrical machine 2 using the oil system 10.

It should be noted that the present invention is not limited to a vehicle powertrain having a central drive configuration. The vehicle powertrain may alternatively have an electric drive axle configuration.

Furthermore, the vehicle may be a fully electric vehicle or a hybrid vehicle. The vehicle is suitably a land-based heavy vehicle, but is not limited thereto. Furthermore, the vehicle may be a vehicle configured to be operated by a driver, either present onboard the vehicle or being remote from the vehicle, or be a fully autonomous vehicle.

Figure 2 schematically illustrates a first example of the oil system 10 as described herein. The oil system is configured to supply oil to both an electrical machine 3 and a transmission 4 of a vehicle powertrain 2 of a vehicle, such as the vehicle 1 shown in Figure 1.

The oil system 10 comprises a first supply conduit 16 and a mechanical pump 11. The mechanical pump 11 is configured to transfer oil from an oil sump 13 of the oil system to the first supply conduit 16. The mechanical pump 11 may be powered by the electrical machine 3, or by a shaft of the transmission 4. A check valve 17 may suitably be arranged in the first supply conduit 16 to prevent oil flow in an incorrect direction of the oil system 10.

The oil system 10 further comprises a second supply conduit 18 configured to supply oil to the transmission 4 of the vehicle powertrain. Moreover, the oil system 10 comprises a third supply conduit 20 configured to supply oil to the electrical machine 3 of the vehicle powertrain. Each of the second supply conduit 18 and the third supply conduit 20 is, at its upstream end, fluidly connected to the first supply conduit 16 at a downstream end 19 of the first supply conduit 16. When the oil supplied via the third supply conduit 20 has passed the electrical machine 3 for the purpose of cooling thereof, it is redirected back to the oil sump 13. Similarly, when the oil supplied via the second supply conduit has passed the transmission for the purpose of cooling and/or lubrication thereof, it is redirected back to the oil sump.

The oil system 10 may further comprise an oil filter 14 and/or a heat exchanger 15 arranged in the first supply conduit 16, suitably downstream of the check valve 17. The heat exchanger 15 may be arranged downstream of the oil filter 14.

Moreover, the oil system 10 comprises a controllable valve 24 arranged in the third supply conduit 20. The controllable valve 24 is configured to control an amount of oil supplied to the electrical machine via the third supply conduit 20 through control of oil pressure distribution, and thus also oil flow distribution, between the second supply conduit 18 and the third supply conduit 20. The controllable valve may for example be an on-off solenoid valve as shown in the figure, or a proportional solenoid valve. The operational condition of the controllable valve 24 may be controlled by a control device, such as the control device 100 described above.

At least in case the controllable valve 24 is a valve that may be controlled only between an open operational state and a closed operational state, i.e. being a valve of on-off type, the oil system suitably comprises a fourth supply conduit 22 bypassing the controllable valve 24. Said fourth supply conduit 22 may, at an upstream end thereof, be fluidly connected to the third supply conduit 20 upstream of the controllable valve, and also, at a downstream end thereof, fluidly connected to the third supply conduit 10 downstream of the controllable valve 24. The fourth supply conduit 20 allows a considerably smaller oil flow therethrough compared to the oil flow through the controllable valve 24 in its open condition. The fourth supply conduit 20 thus ensures that the electrical machine may be supplied with a minimum acceptable oil flow irrespectively of the operational state of the controllable valve 24.

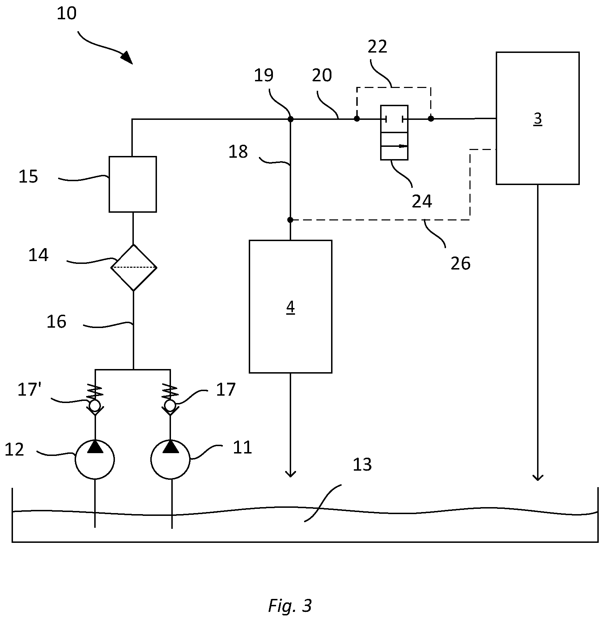

Figure 3 schematically illustrates a second example of the oil system 10 as described herein. The second example essentially corresponds to the first example shown in Figure 2, except that it further comprises an electrical pump 12. The electrical pump 12 is arranged in parallel with the mechanical pump 11 as seen in the oil flow direction of the oil system 10, and is also configured to transfer oil from the oil sump 13 to the first supply conduit 16. The oil system 10 may further comprise an additional check valve 17' configured to prevent oil flow in an incorrect direction, more specifically prevent oil flow from the first supply conduit 16 back to the electrical pump 12.

As shown in Figure 3, the oil system 10 may further comprises a fifth supply conduit 26 configured to supply oil to an auxiliary cooling circuit of the electrical machine 3. The fifth supply conduit 26 is in the figure illustrated to be, at its upstream end, fluidly connected to the second supply conduit 18. However, the fifth supply conduit 26 may alternatively be, at its upstream end, fluidly connected to the third supply conduit upstream of the controllable valve 24 or downstream of the controllable valve 24. It should here be noted that the fifth supply conduit 24 may also be present in the example illustrated in Figure 2, if desired.

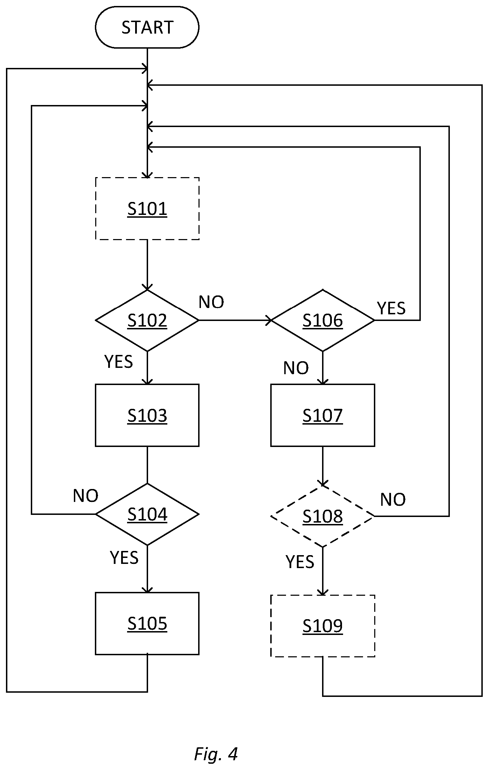

Figure 4 represents a flowchart schematically illustrating an exemplifying embodiment of the herein described method for controlling oil supply to an electrical machine of a vehicle powertrain using the herein described oil system, such as the oil system shown in any one of Figures 2 and 3. Optional steps of the exemplifying embodiment are illustrated by dashed lines in Figure 4.

The method may comprise an initial step S101 of adjusting the oil pressure in the first supply line of the oil system to meet the oil flow demands of the transmission and the electrical machine of the vehicle powertrain, if not already at said oil pressure. The oil pressure may for example be adjusted by controlling the speed of the electrical pump of the oil system, if present. The method may thereafter proceed to step S102.

The method comprises a step S102 of determining whether a predetermined criterion is fulfilled. The predetermined criterion is fulfilled in case the oil temperature at the downstream end of the first supply conduit is above a predetermined temperature threshold and the electrical machine is operated above an upper power threshold and at a rotational speed within the predetermined rotational speed interval. Said predetermined rotational speed interval is defined by a lower rotational speed threshold and an upper rotational speed threshold. In case the predetermined criterion is fulfilled, the method proceeds to step S103.

Step S103 of the method comprises controlling the controllable valve to an at least partially throttled position, if not already in said position. In some cases, said at least partially throttled position may be a closed position. Controlling the controllable valve to said at least partially throttled position alters the oil pressure distribution, and thus also the oil flow distribution, between the second supply line and the third supply line of the oil system. This results in a reduction of the oil supply to the electrical machine of the vehicle powertrain, and an increase of the oil supply to the transmission of the vehicle powertrain.

After step S103, the method proceeds to step S104 which comprises determining whether the speed of the electrical machine has been increased to a speed above the upper rotational speed threshold. In case it is determined in step S104 that the rotational speed of the electrical machine has not been increased above the upper rotational speed threshold, i.e. that the rotational speed of the electrical machine is still within the predetermined rotational speed interval, the method is returned to start.

However, in case it is determined in step S104 that the rotational speed of the electrical machine has been increased to a rotational speed above the upper rotational speed threshold, the method comprises a step S105 of controlling the controllable valve to an open position, thereby increasing the amount of oil supplied to the electrical machine of the vehicle powertrain. After step S105, the method is returned to start.

In case it is determined in step S102 that the predetermined criterion is not fulfilled, the method proceeds to a step S106 of determining whether the controllable valve is in an open position. In case the controllable valve is in the open position, the method may be reverted to start. However, in case the controllable valve is not in an open position, the method may proceed to a step S107 of controlling the controllable valve to an open position.

After step S107, the method may be reverted to start, or to an optional step S108. Optional step S108 comprises determining whether it is possible to reduce the oil pressure in the first supply line, for the purpose of reducing energy consumption of the oil system, while still meeting the oil flow demands of the transmission and the electrical machine. In case it is determined in step S108 that it is not possible to reduce the oil pressure in the first supply line, the method is returned to start.

However, in case it is determined in step S108 that it is possible to reduce the oil pressure in the first supply line, the method may comprise a step S109 of reducing the oil pressure in the first supply line for the purpose of reducing energy consumption of the oil system. This may for example be made by controlling the speed of the electrical pump of the oil system or even stopping the electrical pump, if the electrical pump is present. After step S109, the method is returned to start.

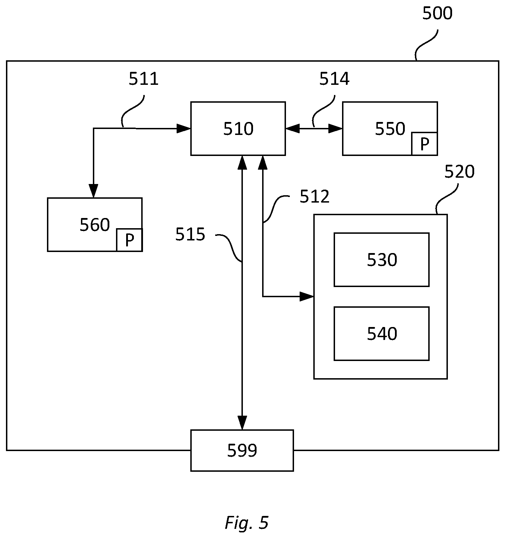

Figure 5 schematically illustrates an example of a device 500. The control device 100 described above may for example comprise the device 500, consist of the device 500, or be comprised in the device 500.

The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P that comprises instructions for controlling oil supply to an electrical machine of a vehicle powertrain using the oil system described herein. The computer program comprises instructions for, in response to a determination that a predetermined criterion is fulfilled, controlling the controllable valve to an at least partially throttled position, unless the controllable valve is already in said position. Said predefined criterion is that the oil temperature at the downstream end of the first supply conduit is above a predetermined temperature threshold while the electrical machine is operated above an upper power threshold and the rotational speed of the electrical machine is within a predetermined rotational speed interval. Said rotational speed interval is defined by a lower rotational speed threshold and an upper rotational speed threshold.

The program P may be stored in an executable form or in a compressed form in a memory 560 and/or in a read/write memory 550.

The data processing unit 510 may perform one or more functions, i.e. the data processing unit 510 may effect a certain part of the program P stored in the memory 560 or a certain part of the program P stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicate with the data processing unit 510 via a data bus 514. The communication between the constituent components may be implemented by a communication link. A communication link may be a physical connection such as an optoelectronic communication line, or a non-physical connection such as a wireless connection, e.g. a radio link or microwave link.

When data are received on the data port 599, they may be stored temporarily in the second memory element 540. When input data received have been temporarily stored, the data processing unit 510 is prepared to effect code execution as described above.

Parts of the methods herein described may be affected by the device 500 by means of the data processing unit 510 which runs the program stored in the memory 560 or the read/write memory 550. When the device 500 runs the program, methods herein described are executed.

## Claims

1. A method, for being performed by a control device (100), for controlling oil supply to an electrical machine (3) of a vehicle powertrain (2) comprising an oil system (10) configured to supply oil to a transmission (4) and an electrical machine (3) of a vehicle powertrain (2), the oil system (10) comprising: a mechanical pump (11) configured to transfer oil to a first supply conduit (16) of the oil system, a speed of the mechanical pump being dependent on rotational speed of the electric machine (3);
a second supply conduit (18) configured to supply oil to the transmission (4), the second supply conduit (18) fluidly connected to the first supply conduit (16) at a downstream end (19) of the first supply conduit (16); and
a third supply conduit (20) configured to supply oil to the electrical machine (3), the third supply conduit (20) fluidly connected to the first supply conduit (16) at the downstream end (19) of the first supply conduit (16),
wherein the oil system (10( further comprises a controllable valve (24) configured to control an amount of oil supplied to the electrical machine (3) via the third supply conduit (20) through control of oil pressure distribution between the second supply conduit (18) and the third supply conduit (20), the method comprising a step of:
in response to a determination that a predetermined criterion is fulfilled, controlling (S103) the controllable valve (24) to an at least partially throttled position, unless the controllable valve (24) is already in said position;
wherein the predetermined criterion is that:
- the oil temperature at the downstream end (19) of the first supply conduit (16) is above a predetermined temperature threshold,
- the electrical machine (3) is operated above an upper power threshold, and
- the rotational speed of the electrical machine (3) is within a predetermined rotational speed interval, said predetermined rotational speed interval being defined by a lower rotational speed threshold and an upper rotational speed threshold.

2. The method according to claim 1, wherein the step of controlling the controllable valve (24) to an at least partially throttled position comprises controlling the controllable valve (24) to a closed position.

3. The method according to any one of claims 1 and 2, further comprising:
in response to a determination that the rotational speed of the electrical machine (3) is above the upper rotational speed threshold while the controllable valve (24) is in said at least partially throttled position, controlling (S105) the controllable valve (24) to an open position so as to thereby increase the amount of oil supplied to the electrical machine (3).

4. A computer program comprising instructions which, when executed by a control device (100), cause the control device (100) to carry out the method according to any one of claims 1-3.

5. A computer-readable medium comprising instructions which, when executed by a control device (100), cause the control device (100) to carry out the method according to any one of claims 1-3.

6. A control device (100) configured to control oil supply to an electrical machine (3) of a vehicle powertrain (2) comprising an oil system (10) configured to supply oil to a transmission (4) and an electrical machine (3) of a vehicle powertrain (2), the oil system (10) comprising:
a mechanical pump (11) configured to transfer oil to a first supply conduit (16) of the oil system, a speed of the mechanical pump being dependent on rotational speed of the electric machine (3);
a second supply conduit (18) configured to supply oil to the transmission (4), the second supply conduit (18) fluidly connected to the first supply conduit (16) at a downstream end (19) of the first supply conduit (16); and
a third supply conduit (20) configured to supply oil to the electrical machine (3), the third supply conduit (20) fluidly connected to the first supply conduit (16) at the downstream end (19) of the first supply conduit (16),
wherein the oil system (10( further comprises a controllable valve (24) configured to control an amount of oil supplied to the electrical machine (3) via the third supply conduit (20) through control of oil pressure distribution between the second supply conduit (18) and the third supply conduit (20), wherein the control device (100) is configured to:
in response to a determination that a predetermined criterion is fulfilled, control the controllable valve (24) to an at least partially throttled position, unless the controllable valve (24) is already in said position;
wherein the predetermined criterion is that:
- the oil temperature at the downstream end (19) of the first supply conduit (16) is above a predetermined temperature threshold,
- the electrical machine (3) is operated above an upper power threshold, and
- the rotational speed of the electrical machine (3) is within a predetermined rotational speed interval, said predetermined rotational speed interval being defined by a lower rotational speed threshold and an upper rotational speed threshold.

7. A vehicle (1) comprising a vehicle powertrain (2) comprising a transmission (4) and an electrical machine (3), the vehicle (1) further comprising a control device (100) according to claim 6.

## Patentansprüche

1. Verfahren, das von einer Steuerungsvorrichtung (100) ausgeführt wird, zur Steuerung der Ölzufuhr zu einer elektrischen Maschine (3) eines Fahrzeugantriebsstrangs (2) mit einem Ölsystem (10), das dazu eingerichtet ist, einem Getriebe (4) und einer elektrischen Maschine (3) des Fahrzeugantriebsstrangs (2) Öl zuzuführen, wobei das Ölsystem (10) umfasst:
eine mechanische Pumpe (11), die dazu eingerichtet ist, Öl an eine erste Zufuhrleitung (16) des Ölsystems zu übertragen, wobei eine Geschwindigkeit der mechanischen Pumpe von der Drehzahl der elektrischen Maschine (3) abhängt;
eine zweite Zufuhrleitung (18), die dazu eingerichtet ist, dem Getriebe (4) Öl zuzuführen, wobei die zweite Zufuhrleitung (18) an einem stromabwärts gelegenen Ende (19) der ersten Zufuhrleitung (16) mit der ersten Zufuhrleitung (16) fluidisch verbunden ist; und
eine dritte Zufuhrleitung (20), die dazu eingerichtet ist, der elektrischen Maschine (3) Öl zuzuführen, wobei die dritte Zufuhrleitung (20) an dem stromabwärts gelegenen Ende (19) der ersten Zufuhrleitung (16) mit der ersten Zufuhrleitung (16) fluidisch verbunden ist,
wobei das Ölsystem (10) ferner ein steuerbares Ventil (24) umfasst, das zum Steuern einer der elektrischen Maschine (3) über die dritte Zufuhrleitung (20) zugeführten Ölmenge durch Steuern der Öldruckverteilung zwischen der zweiten Zufuhrleitung (18) und der dritten Zufuhrleitung (20) eingerichtet ist, wobei das Verfahren folgenden Schritt umfasst:
Steuern (S103) des steuerbaren Ventils (24) in eine wenigstens teilweise gedrosselte Stellung, wenn bestimmt wird, dass ein vorbestimmtes Kriterium erfüllt ist, sofern sich das steuerbare Ventil (24) nicht bereits in dieser Stellung befindet;
wobei das vorbestimmte Kriterium darin besteht, dass:
- die Öltemperatur an dem stromabwärts gelegenen Ende (19) der ersten Zufuhrleitung (16) oberhalb einer vorbestimmten Temperaturschwelle liegt,
- die elektrische Maschine (3) oberhalb einer oberen Leistungsschwelle betrieben wird und
- die Drehzahl der elektrischen Maschine (3) innerhalb eines vorbestimmten Drehzahlintervalls liegt, wobei das vorbestimmte Drehzahlintervall durch eine untere Drehzahlschwelle und eine obere Drehzahlschwelle definiert ist.

2. Verfahren nach Anspruch 1, wobei der Schritt des Steuerns des steuerbaren Ventils (24) in eine wenigstens teilweise gedrosselte Stellung das Steuern des steuerbaren Ventils (24) in eine geschlossene Stellung umfasst.

3. Verfahren nach einem der Ansprüche 1 und 2, das ferner umfasst:
Steuern (S105) des steuerbaren Ventils (24) in eine geöffnete Stellung, um dadurch die der elektrischen Maschine (3) zugeführte Ölmenge zu erhöhen, wenn bestimmt wird, dass die Drehzahl der elektrischen Maschine (3) oberhalb der oberen Drehzahlschwelle liegt, während sich das steuerbare Ventil (24) in der wenigstens teilweise gedrosselten Position befindet.

4. Computerprogramm mit Befehlen, die, wenn sie von einer Steuerungsvorrichtung (100) ausgeführt werden, die Steuerungsvorrichtung (100) dazu veranlassen, das Verfahren nach einem der Ansprüche 1-3 auszuführen.

5. Computerlesbares Medium mit Befehlen, die, wenn sie von einer Steuerungsvorrichtung (100) ausgeführt werden, die Steuerungsvorrichtung (100) dazu veranlassen, das Verfahren nach einem der Ansprüche 1-3 auszuführen.

6. Steuerungsvorrichtung (100), die zur Steuerung der Ölzufuhr zu einer elektrischen Maschine (3) eines Fahrzeugantriebsstrangs (2) mit einem Ölsystem (10) eingerichtet ist, das dazu eingerichtet ist, einem Getriebe (4) und einer elektrischen Maschine (3) des Fahrzeugantriebsstrangs (2) Öl zuzuführen, wobei das Ölsystem (10) umfasst:
eine mechanische Pumpe (11), die dazu eingerichtet ist, Öl an eine erste Zufuhrleitung (16) des Ölsystems zu übertragen, wobei eine Geschwindigkeit der mechanischen Pumpe von der Drehzahl der elektrischen Maschine (3) abhängt;
eine zweite Zufuhrleitung (18), die dazu eingerichtet ist, dem Getriebe (4) Öl zuzuführen, wobei die zweite Zufuhrleitung (18) an einem stromabwärts gelegenen Ende (19) der ersten Zufuhrleitung (16) mit der ersten Zufuhrleitung (16) fluidisch verbunden ist; und
eine dritte Zufuhrleitung (20), die dazu eingerichtet ist, der elektrischen Maschine (3) Öl zuzuführen, wobei die dritte Zufuhrleitung (20) an dem stromabwärts gelegenen Ende (19) der ersten Zufuhrleitung (16) mit der ersten Zufuhrleitung (16) fluidisch verbunden ist,
wobei das Ölsystem (10) ferner ein steuerbares Ventil (24) umfasst, das zum Steuern einer der elektrischen Maschine (3) über die dritte Zufuhrleitung (20) zugeführten Ölmenge durch Steuern der Öldruckverteilung zwischen der zweiten Zufuhrleitung (18) und der dritten Zufuhrleitung (20) eingerichtet ist, wobei die Steuerungsvorrichtung (100) eingerichtet ist zum:
Steuern des steuerbaren Ventils (24) in eine wenigstens teilweise gedrosselte Stellung, wenn bestimmt wird, dass ein vorbestimmtes Kriterium erfüllt ist, sofern sich das steuerbare Ventil (24) nicht bereits in dieser Stellung befindet;
wobei das vorbestimmte Kriterium darin besteht, dass:
- die Öltemperatur an dem stromabwärts gelegenen Ende (19) der ersten Zufuhrleitung (16) oberhalb einer vorbestimmten Temperaturschwelle liegt,
- die elektrische Maschine (3) oberhalb einer oberen Leistungsschwelle betrieben wird und
- die Drehzahl der elektrischen Maschine (3) innerhalb eines vorbestimmten Drehzahlintervalls liegt, wobei das vorbestimmte Drehzahlintervall durch eine untere Drehzahlschwelle und eine obere Drehzahlschwelle definiert ist.

7. Fahrzeug (1) mit einem Fahrzeugantriebsstrang (2), der ein Getriebe (4) und eine elektrische Maschine (3) umfasst, wobei das Fahrzeug (1) ferner eine Steuerungsvorrichtung (100) nach Anspruch 6 umfasst.

## Revendications

1. Procédé, destiné à être réalisé par un dispositif de commande (100), pour commander l'alimentation en huile d'une machine électrique (3) d'un groupe motopropulseur de véhicule (2) comprenant un système d'huile (10) configuré pour alimenter en huile une transmission (4) et une machine électrique (3) d'un groupe motopropulseur de véhicule (2), le système d'huile (10) comprenant :
une pompe mécanique (11) configurée pour transférer de l'huile vers un premier conduit d'alimentation (16) du système d'huile, une vitesse de la pompe mécanique étant dépendante de la vitesse de rotation de la machine électrique (3) ;
un deuxième conduit d'alimentation (18) configuré pour alimenter en huile la transmission (4), le deuxième conduit d'alimentation (18) étant raccordé fluidiquement au premier conduit d'alimentation (16) au niveau d'une extrémité aval (19) du premier conduit d'alimentation (16) ; et
un troisième conduit d'alimentation (20) configuré pour alimenter en huile la machine électrique (3), le troisième conduit d'alimentation (20) étant raccordé fluidiquement au premier conduit d'alimentation (16) au niveau de l'extrémité aval (19) du premier conduit d'alimentation (16),
dans lequel le système d'huile (10) comprend en outre une vanne commandable (24) configurée pour commander une quantité d'huile alimentée vers la machine électrique (3) via le troisième conduit d'alimentation (20) par la commande de la distribution de pression d'huile entre le deuxième conduit d'alimentation (18) et le troisième conduit d'alimentation (20), le procédé comprenant une étape de :
en réponse à une détermination qu'un critère prédéterminé est satisfait, commande (S103) de la vanne commandable (24) vers une position au moins partiellement étranglée, à moins que la vanne commandable (24) ne soit déjà dans ladite position ;
dans lequel le critère prédéterminé est :
- la température de l'huile à l'extrémité aval (19) du premier conduit d'alimentation (16) est au-dessus d'un seuil de température prédéterminé,
- la machine électrique (3) est mise en fonctionnement au-dessus d'un seuil de puissance haut, et
- la vitesse de rotation de la machine électrique (3) est dans un intervalle de vitesses de rotation prédéterminé, ledit intervalle de vitesses de rotation prédéterminé étant défini par un seuil de vitesse de rotation bas et un seuil de vitesse de rotation haut.

2. Procédé selon la revendication 1, dans lequel l'étape de commande de la vanne commandable (24) vers une position au moins partiellement étranglée comprend la commande de la vanne commandable (24) vers une position fermée.

3. Procédé selon l'une quelconque des revendications 1 et 2, comprenant en outre :
en réponse à une détermination que la vitesse de rotation de la machine électrique (3) est au-dessus du seuil de vitesse de rotation haut alors que la vanne commandable (24) est dans ladite position au moins partiellement étranglée, la commande (S105) de la vanne commandable (24) vers une position ouverte de manière à augmenter ainsi la quantité d'huile alimentée vers la machine électrique (3).

4. Programme d'ordinateur comprenant des instructions qui, lorsqu'elles sont exécutées par un dispositif de commande (100), amènent le dispositif de commande (100) à effectuer le procédé selon l'une quelconque des revendications 1 à 3.

5. Support lisible par ordinateur comprenant des instructions qui, lorsqu'elles sont exécutées par un dispositif de commande (100), amènent le dispositif de commande (100) à effectuer le procédé selon l'une quelconque des revendications 1 à 3.

6. Dispositif de commande (100) configuré pour commander l'alimentation en huile d'une machine électrique (3) d'un groupe motopropulseur de véhicule (2) comprenant un système d'huile (10) configuré pour alimenter en huile une transmission (4) et une machine électrique (3) d'un groupe motopropulseur de véhicule (2), le système d'huile (10) comprenant :
une pompe mécanique (11) configurée pour transférer de l'huile vers un premier conduit d'alimentation (16) du système d'huile, une vitesse de la pompe mécanique étant dépendante de la vitesse de rotation de la machine électrique (3) ;
un deuxième conduit d'alimentation (18) configuré pour alimenter en huile la transmission (4), le deuxième conduit d'alimentation (18) étant raccordé fluidiquement au premier conduit d'alimentation (16) au niveau d'une extrémité aval (19) du premier conduit d'alimentation (16) ; et
un troisième conduit d'alimentation (20) configuré pour alimenter en huile la machine électrique (3), le troisième conduit d'alimentation (20) étant raccordé fluidiquement au premier conduit d'alimentation (16) au niveau de l'extrémité aval (19) du premier conduit d'alimentation (16),
dans lequel le système d'huile (10) comprend en outre une vanne commandable (24) configurée pour commander une quantité d'huile alimentée vers la machine électrique (3) via le troisième conduit d'alimentation (20) par la commande de la distribution de pression d'huile entre le deuxième conduit d'alimentation (18) et le troisième conduit d'alimentation (20), dans lequel le dispositif de commande (100) est configuré pour :
en réponse à une détermination qu'un critère prédéterminé est satisfait, commander la vanne commandable (24) vers une position au moins partiellement étranglée, à moins que la vanne commandable (24) ne soit déjà dans ladite position ;
dans lequel le critère prédéterminé est :
- la température de l'huile à l'extrémité aval (19) du premier conduit d'alimentation (16) est au-dessus d'un seuil de température prédéterminé,
- la machine électrique (3) est mise en fonctionnement au-dessus d'un seuil de puissance haut, et
- la vitesse de rotation de la machine électrique (3) est dans un intervalle de vitesses de rotation prédéterminé, ledit intervalle de vitesses de rotation prédéterminé étant défini par un seuil de vitesse de rotation bas et un seuil de vitesse de rotation haut.

7. Véhicule (1) comprenant un groupe motopropulseur de véhicule (2) comprenant une transmission (4) et une machine électrique (3), le véhicule (1) comprenant en outre un dispositif de commande (100) selon la revendication 6.
